# EUROPÄISCHE PATENTSCHRIFT

(11) **EP 0 820 792 B1**
(45) Veröffentlichungstag und Bekanntmachung des Hinweises auf die Patenterteilung: **21.11.2001**
(21) Anmeldenummer: 97110367.6
(22) Anmeldetag: 25.06.1997
(51) Int. Cl.: B01D 1/00, B01D 1/12, C02F 1/04, F28G 9/00, B08B 9/02

(54) **Verfahren zum Entfernen von Verkrustungen in Eindampfanlagen**
Process for removing incrustations in evaporating devices
Procédé pour enlever des incrustations dans les dispositifs d'évaporation

(30) Priorität: 23.07.1996 DE 19629641
(43) Veröffentlichungstag der Anmeldung: 28.01.1998
(73) Patentinhaber: mg technologies ag, 60325 Frankfurt am Main (DE)
(72) Erfinder: Roller, Günter, 61352 Bad Homburg (DE); Stein, Dieter, 65191 Wiesbaden (DE); Wagner, Ulrich, Dr., 06406 Bernburg (DE); Englmaier, Ludwig, 83308 Trostberg (DE)
(74) Vertreter: Revesz, Veronika

(56) Entgegenhaltungen:
- EP-A- 0 250 382
- DE-A- 2 948 541
- DE-A- 3 625 408
- US-A- 5 086 833

## Beschreibung

Die Erfindung betrifft ein Verfahren zum Eindampfen einer Lösung in einer Eindampfanlage, wobei in einer Eindampfstufe Lösung zwischen einem Wärmeaustauscher und einem Ausdampfbehälter im Kreis geführt und Dampf aus dem Ausdampfbehälter abgezogen wird und wobei während des Eindampfbetriebs Stoffe aus der Lösung Anbackungen bilden und zum Entfernen der Anbackungen Feststoffe mit der Lösung im Kreislauf geführt werden, wobei der Feststoffgehalt der im Kreislauf geführten Lösung mindestens 3 Gew.-% beträgt, abrasiv wirkt und zur Entfernung der Anbackungen beiträgt.

In Eindampfanlagen muss man häufig mit Verkrustungen rechnen, die den weiteren Betrieb behindern oder auch das Abschalten und Reinigen verkrusteter Anlagenteile notwendig machen. Aus DE-A-36 25 408 kennt man das eingangs genannte Verfahren zum Vermeiden von Anbackungen, bei welchem man der einzudampfenden Lösung von außen körnige Feststoffe zugibt und diese mit der Lösung im Wärmeaustauscher im Kreislauf führt. Die Feststoffe, bei denen es sich auch um das Material der Anbackungen handeln kann, wirken abrasiv und beseitigen oder verhindern Anbackungen.

Der Erfindung liegt die Aufgabe zu Grunde, beim eingangs genannten Verfahren entstandene Anbackungen schnell und kostengünstig entfernen zu können, ohne von außen Feststoffe zuführen zu müssen. Erfindungsgemäß gelingt dies durch die im Kennzeichen des Patentanspruchs 1 genannten Maßnahmen. Auf diese Weise können insbesondere Anbackungen an den Heizflächen des Wärmeaustauschers oder auch von anderen Stellen der Rohrleitungen abgetragen werden. Der Gehalt an körnigen Feststoffen in der Reinigungssuspension liegt üblicherweise im Bereich von 3 bis 50 Gew.-% und vorzugsweise 5 bis 30 Gew.-%. Die Obergrenze des Feststoffgehalts in der Reinigungssuspension ist dann erreicht, wenn sich die Suspension auf Grund ihrer Zähigkeit durch eine Pumpe kaum noch im Kreis führen lässt.

Bilden sich Anbackungen zum Beisplel im Wärmeaustauscher einer Eindampfstufe, durch die während des Eindampfbetriebs eine praktisch feststofffreie Lösung im Kreis geführt wird, so wird die Stufe zum Entfernen der Anbackungen zunächst aus dem Ausdampfbetrieb ausgekoppelt und auf Reinigungsbetrieb umgeschaltet. Zu diesem Zweck führt man der Stufe einzudampfende Lösung zu, wobei man den Wärmeaustauscher beheizt, so daß die Reinigungslösung teilweise verdampft und dabei Feststoffe aus der Reinigungslösung auskristallisieren. Die so gebildete feststoffhaltige Reinigungssuspension wird dann noch so lange im Kreis geführt, bis die Anbackungen entfernt sind. Es wird zumeist möglich sein, während eine Eindampfstufe auf Reinigungsbetrieb geschaltet ist, den Eindampfbetrieb in der übrigen Stufe oder den übrigen Stufen bei Teillast weiterzuführen.

Das Verfahren zum Entfernen von Anbackungen ist für unterschiedliche Eindampfanlagen geeignet, nur beispielsweise seien hier Anlagen zum Eindampfen von NaCl-haltigem Abwasser aus der Rauchgasreinigung von Müllverbrennungsanlagen genannt. Bei den zu entfernenden Anbackungen handelt es sich zum Beispiel um Sulfate, Karbonate oder Silikate wie etwa Gips oder Erdalkalikarbonate.

Ausgestaltungsmöglichkeiten des Verfahrens werden mit Hilfe der Zeichnung erläutert. Es zeigt:
- Fig. 1: eine zweistufige Eindampfanlage und
- Fig. 2: eine dreistufige Eindampfanlage in schematischer Darstellung.

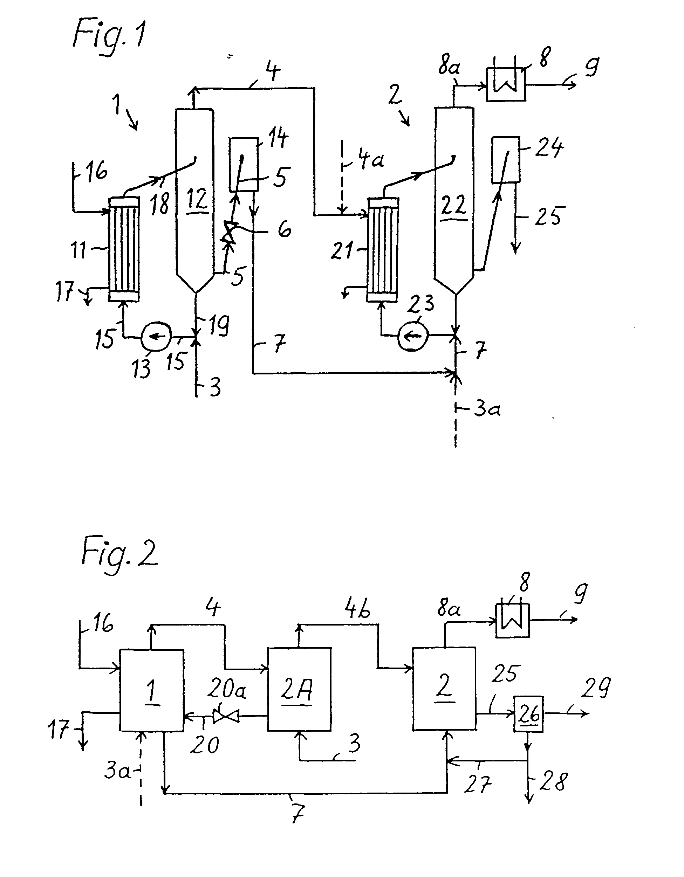

Gemäß Fig. 1 sind die wesentlichen Teile der ersten Eindampfstufe (1) der indirekte Wärmeaustauscher (11), der Ausdampfbehälter (12), die Kreislaufpumpe (13) und der Ausschleusbehälter (14). Die einzudampfende Lösung wird durch die Leitung (3) herangeführt und gelangt durch die Leitung (15) in den Lösungskreislauf und in den Wärmeaustauscher (11), dem man als Heizmedium zum Beispiel Wasserdampf durch die Leitung (16) zuführt. Abgekühltes Heizmedium wird durch die Leitung (17) entfernt. Erhitzte Lösung gelangt durch die Leitung (18) in den Ausdampfbehälter, aus dem man durch die Leitung (4) Brüden abzieht. Die im Kreislauf geführte Lösung verläßt den Ausdampfbehälter (12) durch die Leitung (19). Die restliche, bereits aufkonzentrierte Lösung gelangt durch die Leitung (5) und das geöffnete Ventil (6) zum Ausschleusbehälter (14) und wird durch die Leitung (7) in die Eindampf-Endstufe (2) geführt. Die Stufe (2) arbeitet prinzipiell in der gleichen Weise wie die bereits beschriebene Vorkonzentrierungsstufe (1). Zur Endstufe (2) gehören der Wärmeaustauscher (21), der Ausdampfbehälter (22), die Kreislaufpumpe (23) und der Ausschleusbehälter (24). Die aus dem Ausdampfbehälter (22) abgezogenen Brüden gelangen zunächst durch die Leitung (8a) zum Kondensator (8), Restgas wird in der Leitung (9) abgezogen. Kristallhaltige Suspension entnimmt man dem Behälter (24) durch die Leitung (25).

Wenn sich in der Vorkonzentrierungsstufe (1), zum Beispiel an den Heizflächen des Wärmeaustauschers (11), störende Anbackungen gebildet haben, schaltet man für diese Stufe den Eindampfbetrieb ab und geht auf Reinigungsbetrieb über. Zu diesem Zweck schließt man das Ventil (6) und führt die einzudampfende Lösung ganz oder teilweise durch die gestrichelt gezeichnete Leitung (3a) direkt in die Endstufe (2). Die Stufe (2) kann hierbei mit Teillast betrieben werden; zusätzliches Heizmedium in Form von Frischdampf kann man durch die Leitung (4a) heranführen.

Während des Reinigungsbetriebs in der Vorkonzentrierungsstufe (1) führt man dem Wärmeaustauscher (11) durch die Leitung (16) Heizmedium in solcher Menge zu, daß die im Kreislauf geführte Lösung intensiv eingedampft wird und Feststoffe auskristallisieren. Die so gebildete Reinigungssuspension wird so lange durch die Pumpe (13), den Wärmeaustauscher (11) und den Ausdampfbehälter (12) im Kreis geführt, bis die störenden Ansätze beseitigt sind. Während dieser Zeit wird durch die Leitung (3) ein gewisser Teil einzudampfende Lösung zugespeist, um die Kristallbildung im Kreislauf der Stufe (1) zu ermöglichen. Wenn die Ansätze entfernt sind, kann der normale Eindampfbetrieb wieder aufgenommen werden.

### Beispiel

Man arbeitet mit der Verfahrensführung gemäß Fig. 2 mit 3 Eindampfstufen (1), (2A) und (2). Die Bezugsziffern haben die bereits zusammen mit Fig. 1 erläuterte Bedeutung. Die Soleleitung (20) verbindet im Normalbetrieb bei geöffnetem Ventil (20a) die Stufe (2A) mit der Stufe (1); durch die Leitungen (4) und (4b) werden Brüden zum nicht dargestellten Wärmeaustauscher der benachbarten Stufe (2A) bzw. (2) geführt. Aus der eingedampften Lösung der Leitung (25) trennt man in einer Zentrifuge (26) Salz ab, das man über den Weg (29) abführt. Ein Teil der aus der Zentrifuge kommenden Mutterlauge wird in der Leitung (27) zurück in den Lösungskreislauf der Stufe (2) gegeben, die restliche Mutterlauge wird in der Leitung (28) abgezogen.

Während des Normalbetriebs mit den 3 Eindampfstufen (1), (2A) und (2) führt man der Stufe (2A) durch die Leitung (3) pro Stunde 7574 kg Sole mit einem NaCl-Gehalt von 123 g/l und einer Temperatur von 55°C zu. Die Sole kommt aus einer Anlage zum Reinigen von Rauchgas einer Müllverbrennungsanlage und enthält neben NaCl insbesondere noch kleine Mengen an Ca-, Sulfat- und Carbonat-Ionen sowie Silikate, die in der Eindampfanlage zur Krustenbildung neigen. Die Leitung (3a) wird nicht benutzt. Die Temperaturen in verschiedenen Leitungen sind folgende:

| Leitung | 16 | 4 | 4b | 8a |
|---|---|---|---|---|
| Temperatur | 130°C | 85°C | 70°C | 55°C |

In der Leitung (16) werden 2500 kg/h Wasserdampf von 2,5 bar herangeführt, im Kondensator (8) herrscht ein Druck von 0,11 bar, über den Weg (29) werden 621 kg/h NaCl-Kristalle abgezogen, und durch die Leitung (28) entfernt man 956 kg/h Mutterlauge. Insgesamt fallen in den 3 Eindampfstufen und im Kondensator (8) 8500 kg/h Kondensat an, nämlich 6000 kg/h Brüdenkondensat und 2500 kg/h Frischdampfkondensat in der Leitung (17).

Wenn in der Stufe (2A) Krusten zu entfernen sind, wird diese Stufe aus dem Eindampfbetrieb durch Schließen des Ventils (20a) abgekoppelt und die einzudampfende Sole in der verringerten Menge von 4900 kg/h durch die Leitung (3a) direkt der Stufe (1) aufgegeben. Zum Zeitpunkt der Abkopplung beträgt die NaCl-Konzentration in der in der Stufe (2A) umlaufenden Lösung 169 g/l. Durch die Leitung (3) werden dieser Stufe 2651 kg/h der einzudampenden Sole zugeführt, um die Bildung von Salzkristallen herbeizuführen. Nach 7 Stunden enthält die in der Stufe (2A) umgepumpte Suspension 15 Gew.-% Salzkristalle, der Kreislaufbetrieb mit der Suspension wird weitere 12 Stunden fortgesetzt, wobei die Anbackungen verschwinden. Die Suspension wird einem Vorratsbehälter für einzudampfende Sole zugeführt, und die Stufe (2A) kann dann wieder in den normalen 3-stufigen Eindampfbetrieb eingeschaltet werden.

## Patentansprüche

1. Verfahren zum Eindampfen einer Lösung in einer Eindampfanlage, wobei in einer Eindampfstufe Lösung zwischen einem Wärmeaustauscher (11, 21) und einem Ausdampfbehälter (12, 22) im Kreis geführt und Dampf aus dem Ausdampfbehälter abgezogen wird und wobei während des Eindampfbetriebs Stoffe aus der Lösung Anbackungen bilden und zum Entfernen der Anbackungen Feststoffe mit der Lösung im Kreislauf geführt werden, wobei der Feststoffgehalt der im Kreislauf geführten Lösung mindestens 3 Gew.-% beträgt, abrasiv wirkt und zur Entfernung der Anbackungen beiträgt, **dadurch gekennzeichnet, dass** die Eindampfanlage mehrstufig ist und eine Eindampf-Endstufe (2) und mindestens eine Vorkonzentrierungsstufe (1) aufweist, dass man zum Entfernen der Anbackungen den Eindampfbetrieb während einer Reinigungszeit in der von den Anbackungen betroffenen und zu reinigenden Eindampfstufe unterbricht und durch den Wärmeaustauscher und den Ausdampfbehälter der zu reinigenden Stufe einzudampfende Lösung als Reinigungslösung im Kreislauf führt und einzudampfende Lösung ergänzend dem Kreislauf zuführt, und dass man die Lösung in der Reinigungszeit durch Beheizen des Wärmeaustauschers intensiv eindampft, wobei die abrasiv wirkenden Feststoffe auskristallisieren und ausfallen.

2. Verfahren nach Anspruch 1, **dadurch gekennzeichnet, dass** man während der Zeit des Entfernens von Anbackungen im Wärmeaustauscher einer Vorkonzentrierungsstufe diese Vorkonzentrierungsstufe während der Reinigungszeit aus dem Eindampfbetrieb auskoppelt und gleichzeitig den Eindampfbetrieb durch die andere Stufe oder die anderen Stufen fortsetzt.

## Claims

1. Process for evaporating a solution in an evaporation plant, wherein in an evaporation stage solution is circulated between a heat exchanger (11, 21) and a stripping container (12, 22) and steam is withdrawn from the stripping container and wherein during the evaporation operation substances from the solution form incrustations and in order to remove the incrustations solids are circulated with the solution, the solids content of the solution which is circulated being at least 3% by weight, having an abrasive action and contributing to removing the incrustations, **characterised in that** the evaporation plant is a multi-stage one and has a final evaporation stage (2) and at least one preconcentration stage (1), that in order to remove the incrustations the evaporation operation is interrupted during a cleaning period in the evaporation stage which is affected by the incrustations and is to be cleaned, and solution which is to be evaporated is circulated through the heat exchanger and the stripping container of the stage to be cleaned as cleaning solution and solution which is to be evaporated is fed to the circulation as a supplement, and that the solution is intensively evaporated during the cleaning period by heating the heat exchanger, whereupon the solids having an abrasive action crystallise out and precipitate.

2. A process according to Claim 1, **characterised in that** during the time of removal of incrustations in the heat exchanger of a preconcentration stage this preconcentration stage is disconnected from the evaporation operation during the cleaning period and at the same time the evaporation operation is continued by the other stage or other stages.

## Revendications

1. Procédé d'évaporation d'une solution dans une installation d'évaporation, dans lequel on fait passer en circuit dans un étage d'évaporation de la solution entre un échangeur de chaleur (11, 21) et une cuve (12, 22) d'évaporation et on soutire de la vapeur de la cuve d'évaporation et, pendant le fonctionnement en évaporation, des substances forment à partir de la solution des incrustations et pour enlever les incrustations on fait passer dans le circuit des substances solides avec la solution, la teneur en substances solides de la solution passant en circuit étant d'au moins 3% en poids, ayant une action abrasive et contribuant à l'enlèvement des incrustations, **caractérisé en ce que** l'installation d'évaporation est à plusieurs étages et comprend un étage (2) final d'évaporation et au moins un étage (1) de préconcentration, **en ce que** pour enlever les incrustations on interrompt le fonctionnement en évaporation pendant une durée de nettoyage dans l'étage d'évaporation concerné par les incrustations et à nettoyer et on fait passer en circuit, dans l'échangeur de chaleur et dans la cuve d'évaporation, la solution à évaporer vers l'étage à nettoyer en tant que solution de nettoyage et on envoie de la solution à évaporer en complément au circuit et **en ce que** l'on évapore de manière intense la solution pendant la durée de nettoyage par chauffage de l'échangeur de chaleur, ce qui fait cristalliser et précipiter les substances solides ayant un effet abrasif.

2. Procédé suivant la revendication 1, **caractérisé en ce que**, pendant la durée de l'enlèvement des incrustations dans l'échangeur de chaleur d'un étage de préconcentration, on découple l'étage de préconcentration, pendant la durée de nettoyage, du fonctionnement en évaporation et on poursuit en même temps le fonctionnement en évaporation dans l'autre étage ou les autres étages.
